# EUROPEAN PATENT APPLICATION

(11) **EP 4 524 907 A1**
(43) Date of publication of application: **19.03.2025**
(21) Application number: 23198000.4
(22) Date of filing: 18.09.2023
(51) Int. Cl.: G06V 20/52, G06V 20/59

(54) **VEHICULAR SAFETY MONITORING**

(71) Applicant: Aptiv Technologies AG, 8200 Schaffhausen (CH)
(72) Inventor: BARTH, Alexander, 42929 Wermelskirchen (DE); REHFELD, Timo, 51109 Köln (DE)
(74) Representative: Bardehle Pagenberg Partnerschaft mbB Patentanwälte Rechtsanwälte

(57) **Abstract**

A computerized method of vehicular safety monitoring is presented. The method comprises determining a driver-associated state based on data from one or more sensors of a vehicle, wherein at least one sensor captures a cabin of the vehicle, comparing the driver-associated state to one or more predefined rules, and in response to detection of a violation of a rule of the one or more rules, triggering a warning event.

## Description

### FIELD

The present disclosure generally relates to safety improvements for vehicles and, in particular, to methods and systems of vehicular safety monitoring.

### BACKGROUND

Smart vehicles, such as smart cars, smart busses, and the like, are on their way to significantly improve the safety of passengers. Such smart vehicles may be equipped with onboard cameras and may be capable of capturing images of the vehicle's interior. Those images can then be used, sometimes in combination with other sensors, for different safety related tasks.

In shared or rented vehicles, or when a young driver is using a vehicle, i.e., in situations where drivers must comply with restrictions, vehicle safety monitoring is important not only for the driver but also for other entities such as the carsharing or rental company or the parents of the young driver. Current vehicle safety monitoring systems focus on monitoring vehicle operating conditions, such as speed or geolocation, i.e., a general vehicle state. While onboard cameras can identify the driver to determine rules for the driver to follow, current systems do not monitor the entire cabin situation and cannot determine a comprehensive driver-associated state.

Hence, there is a need for providing an effective vehicular safety monitoring system that focuses on determining a comprehensive driver-associated state taking cabin situations into account.

### SUMMARY

In this context, methods, systems and computer program products are presented as defined by the independent claims.

More specifically, a computerized method of vehicular safety monitoring is presented. The method comprises determining a driver-associated state based on data from one or more sensors of a vehicle, wherein at least one sensor captures a cabin of the vehicle, comparing the driver-associated state to one or more predefined rules, and in response to detection of a violation of a rule of the one or more rules, triggering a warning event.

In some embodiments, a sensor of the one or more sensors is an onboard camera, and determining the driver-associated state comprises obtaining image data from the onboard camera, determining, based on the image data, at least one of a seating pose of a driver of the vehicle, an interaction of the driver with a person and/or with an object in the vehicle, and a type of an object placed within the cabin, and determining the driver-associated state based on at least one of the seating pose of the driver of the vehicle, the interaction of the driver with the person and/or with the object in the vehicle, and the type of the object placed within the cabin.

In further embodiments, determining the driver-associated state also comprises determining at least one of a number of persons in the cabin, an age of one or more persons, activities of one or more persons, a seat belt status of one or more persons, and alcohol usage and/or intoxication of one or more persons, and determining the driver-associated state based on at least one of the number of persons in the cabin, the age of one or more persons, the activities of one or more persons, the seat belt status of one or more persons, and the alcohol usage and/or intoxication of one or more persons.

In some embodiments, determining the driver-associated state is further based on additional vehicle data, wherein the additional vehicle data comprises input from further vehicle sensors, a state of an advanced driver assistance system, and/or a state of an onboard infotainment system.

In yet further embodiments, the one or more rules concern at least one of an existence of a co-driver, a maximum number of persons in the vehicle, phone usage while driving, a maximum speed-limit, an area allowed for driving, and a time period allowed for driving.

In some embodiments, the warning event is at least one of an email sent to an email address associated with the vehicle, a message sent to an application connected with the vehicle, a warning sound outputted from onboard speakers, a warning light at a dashboard of the vehicle, and a warning message displayed on an infotainment system of the vehicle.

In further embodiments, the method further comprises determining a warning level associated with the violation of a rule of the one or more rules, wherein the warning level defines the warning event to be triggered.

In yet further embodiments, the method further comprises, in response to the violation of the one or more rules, interacting with one or more vehicle driving control systems.

Another aspect concerns a system of vehicular safety monitoring, the system comprising one or more sensors, wherein at least one sensor is configured to capture a cabin of a vehicle, a vehicle monitoring compute unit configured to determine a driver-associated state based on data from one or more sensors of the vehicle and compare the driver-associated state to one or more predefined rules, and a communication unit configured to, in response to detection of a violation of a rule of the one or more rules, triggering a warning event.

In some embodiments, a cabin sensor of the one or more cabin sensors is an onboard camera, and the vehicle monitoring compute unit is further, for determining the driver-associated state, configured to obtain image data from the onboard camera, determine, based on the image data, at least one of a seating pose of a driver of the vehicle, an interaction of the driver with a person and/or with an object in the vehicle, and a type of an object placed within the cabin, and determine the driver-associated state based on at least one of the seating pose of the driver of the vehicle, the interaction of the driver with the person and/or with the object in the vehicle, and the type of the object placed within the cabin.

In further embodiments, the vehicle monitoring compute unit is further, for determining the state driver-associated state, configured to determine at least one of a number of persons in the cabin, an age of one or more persons, activities of one or more persons, a seat belt status of one or more persons, and alcohol usage and/or intoxication of one or more persons, and determine the driver-associated state further based on at least one of the number of persons in the cabin, the age of one or more persons, the activities of one or more persons, the seat belt status of one or more persons, and the alcohol usage and/or intoxication of one or more persons.

In some embodiments, the vehicle monitoring compute unit is further configured to determine the driver-associated state based on additional vehicle data, wherein the additional vehicle data comprises input from further vehicle sensors, a state of an advanced driver assistance system, and/or a state of an onboard infotainment system.

In yet further embodiments, the one or more rules concern at least one of an existence of a co-driver, a maximum number of persons in the vehicle, phone usage while driving, a maximum speed-limit, an area allowed for driving, and a time period allowed for driving.

In some embodiments, the warning event is at least one of an email sent to an email address associated with the vehicle, a message sent to an application connected with the vehicle, a warning sound outputted from onboard speakers, a warning light at a dashboard of the vehicle, and a warning message displayed on an infotainment system of the vehicle.

In further embodiments, the communication unit is further configured to determine a warning level associated with the violation of a rule of the one or more rules, wherein the warning level defines the warning event to be triggered.

In yet further embodiments, the system further being, in response to the violation of the one or more rules, configured to interact with one or more vehicle driving control systems.

A further aspect concerns a vehicle the system of vehicular safety monitoring as described herein.

A final aspect concerns a computer program product comprising instructions, which, when executed on a computer, cause the computer to perform the methods as described herein.

These and other objects, embodiments and advantages will become readily apparent to those skilled in the art from the following detailed description of the embodiments having reference to the attached figures, the disclosure not being limited to any particular embodiments.

### BRIEF DESCRITPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 is a high-level overview of an implementation of vehicular safety monitoring.
Fig. 2 further details how a driver-associated state is determined in embodiments.
Figs. 3 and 4 show images from an onboard camera of situations, relevant to determining the driver-associated state.
Fig. 5 is a further refinement of how a driver-associated state is determined in embodiments.
Fig. 6 presents a car with sensors and systems for providing additional data for determining the driver-associated state.
Fig. 7 depicts technical modules that support the vehicular safety monitoring method according to embodiments.
Fig. 8 is a further embodiment showing the calculation of a safe driving score.
Fig. 9 presents an interior of a vehicle with possible positions of onboard cameras.
Fig. 10 is diagrammatic representation of a computing system implementing the functionalities described herein.

### DETAILED DESCRIPTION

The present disclosure relates to methods and systems of vehicular safety monitoring. Vehicular safety monitoring is relevant for several situations.

For example, driver's that just obtained a driver's license and in particular young drivers, e.g., between 16 years and 20 years, can have a special need for driver surveillance systems. In some countries there are even legal requirements for young drivers, e.g. that they are only allowed to operate a car when an adult is in the passenger seat, or the maximum number of passengers is limited. Parents of young drivers can also be in particular interested in the safety of their child and want to know how the child is driving. Cabin monitoring technology can enable some special monitoring functions for parents, and to support young drivers in the cabin.

As another example, car sharing or car rental services may also seek to monitor the driver's behavior. Often, young drivers are not allowed to rent a car. If rental firms want to allow young drivers to rent a car, they may define some rules that have to be obeyed by the drivers, e.g., not driving out of state, not smoking/drinking in the car, not exceeding the speed limit, not more than two passengers in the car, and the like. Cabin monitoring technology can support the rental firms in such approaches.

Sensors in the vehicle may be further used to analyze how energy efficient a given driver is driving and to compute an energy efficiency score. Frequent acceleration/deceleration, for example, could reduce such score, predictive driving with less variation in velocity can increase the score. Additionally, a safe driving score may be calculated to rate the driver's driving behavior in terms of safety. All these approaches may support a monitoring of drivers.

Before turning to a detailed description, some general definitions and explanations are given in the following. A vehicle herein is also referred to as smart vehicle, smart car, or car. Vehicle safety monitoring by way of the driver-associated state according to the disclosure relates to monitoring a vehicle's cabin state and optionally/additionally the vehicle's operational state. These two states may form a driver-associated state according to the disclosure in the sense that it is the driver that is (usually) responsible for the state of the cabin and the vehicle's operating parameters. Moreover, in vehicle safety monitoring, rules are defined per driver, i.e., these rules may also be considered to be driver-associated rules. The driver-associated state is compared to the rules in order to determine whether the rules are obeyed. If not, an event is triggered, e.g., informing the owner or operator of the vehicle, the parents of the driver or the like about the violation of the rule. The details of the vehicular safety monitoring method and system are described in the following with respect to the Figures.

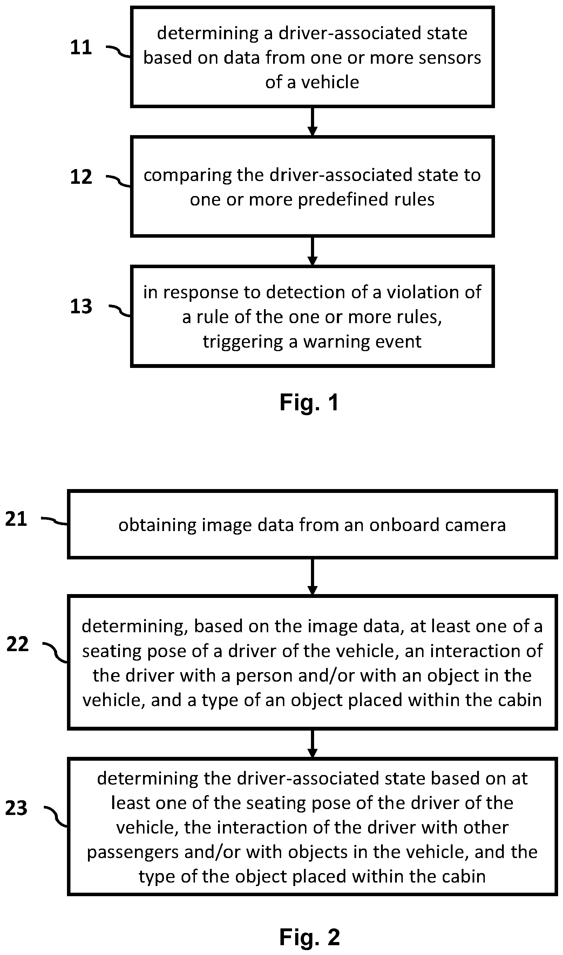

Fig. 1 is a high-level overview of an implementation of vehicular safety monitoring. The method starts in box 11 (in some embodiments executed by a vehicle monitoring compute unit) with determining a driver-associated state based on data from one or more sensors of a vehicle. At least one sensor of the one or more sensors captures a cabin of the vehicle. A sensor that captures the cabin of the vehicle may be an onboard camera or another sensor, such as a radar sensor. Onboard cameras may comprise color, monochrome, or grayscale cameras, infrared cameras, depth cameras, thermal cameras, event cameras (i.e. cameras that operate at very high frame rates and only output the inter-frame differences, e.g., motion), or combinations thereof. Other sensors may be velocity/speed sensors, radar sensors for detecting objects in the way of the vehicle, different engine sensors, a GPS sensor, parking sensors, weight sensors on seats, seatbelt sensors, door opening sensors, microphones, and the like. Other cabin or noncabin sensors may take the form of, e.g., a radar, lidar, or ultrasound sensor, or a combination thereof, or of a camera analogous to the onboard camera.

The driver-associated state is a state that is related to the driver but - in contrast to prior art vehicular monitoring systems - is not only focusing on the driver and the driver's driving behavior but generally takes the situation of the whole cabin into account. To be even more holistic, the driver-associated state comprises at least a state of the cabin but may also comprise vehicle operating states, such as velocity of the vehicle, geolocation of the vehicle, distance to other traffic participants, and the like. The state of the cabin or cabin state may relate to many different aspects and may reflect the overall situation in the cabin. For example, the cabin state may comprise at least one of how many persons have been determined to be in the vehicle, the seating pose of passengers, the age of the passengers, activities of the driver and passengers, such as phone usage, talking, eating, drinking, gestures, hand on steering wheel etc., detection and classification of objects on seats, seat belt status, alcohol usage and/or intoxication of one or more persons, and such. Using information relating to the state of the cabin as a whole, e.g., considered number of passenger, interaction of passengers, objects in the vehicle, poses of the driver and other passengers, and the like, improves the vehicular safety monitoring compared to the prior art, which only focuses on the situation of the driver.

Determining the driver-associated state may further be based on additional vehicle data, wherein the additional vehicle data comprises input from further vehicle sensors, a state of an advanced driver assistance system, and/or a state of an onboard infotainment system. For example, the volume and type of music played with the onboard infotainment system may be considered for determining the driver-associated state. Additionally or alternatively, the state of the advanced driver assistance system, such as whether the car is in heavy traffic, the distance to other cars, bicyclists, pedestrians, and the like, may be taken into account. Different implementations are apparent to the person skilled in the art. For example, if a speed of the vehicle is to be considered for determining the driver-associated state, the speed may be determined directly from data from a wheel speed sensor (e.g., located in the wheels as part of the Antilock Braking System (ABS) or Electronic Stability Program (ESP) control system, wherein its data is directly received from the vehicle message bus) but may also be received from the advanced driver assistance system. The advanced driver assistance system may in addition provide information on the speed of other traffic participants in the surrounding of the vehicle, information on the allowed speed limit, or the like. Or, if the music volume is to be considered for determining the driver-associated state, the volume may be determined directly from a microphone in the cabin or received from the onboard infotainment system. The microphone may also sense other audio or noise sources, which would not be known by the infotainment system, e.g. music played from a Bluetooth speaker or smart phone in the cabin, or an audio source from outside the vehicle.

Determining the driver-associated state based on the sensor data may be achieved by applying several methods, such as traditional algorithms and/or machine learning methods for object detection and classification, for seat pose determination, for determination and classification of interactions, for seatbelt position verification, and the like. Before these methods may be applied, raw sensor signals may be pre-processed. Pre-processing of the raw data may relate to pixel processing, e.g. computing an RGB color image or monochromatic image from raw pixel grid with a specific color filter array (CFA), e.g. red, green, blue, and/or IR pixels. Pre-processing may further comprise of image enhancements (e.g. denoising, sharpening, black level correction, lens shading correction, white balancing, etc.), image cropping or resizing, distortion correction, motion detection (e.g. optical flow), or a combination thereof.

For example, the driver-associated state - determined based on, e.g., pre-processed sensor signals, such as camera images - may have the following characteristics: one driver and three passengers in the vehicle, one large item on a seat, not fixed on the seat, and distractive interactions of driver detected for 62 s in last 300 s.

In this example, the number of passengers as well as the item on the seat may have been detected with a bounding box object detection algorithm. The information that the item is not fixed on the seat may have been determined by an image analysis algorithm trained to detect seat belt routings and/or movements of the object. Movement of the object may be determined by tracking a bounding box location of the object as well as (alternatively or additionally) characteristic feature points on the object over time in terms of displacements in the image coordinates. The distractive interaction may have been determined by a machine learning algorithm trained to classify actions based on movements of passengers and/or based on a state of the infotainment system, e.g., volume and type of music played. Distractive interactions may be one or more of the following: driver frequently looking at other passengers, driver frequently reaching to front passenger seat, driver frequently turning to back seat, leaning to side, leaning forward, driver frequently interacting with child (or child seat) via hand proximity or viewing direction, other hand interaction, violence, chaos and/or fighting between persons, loud and aggressive music, and strong negative or positive mood (very happy/heavy laughing, very unhappy/panic emotions observed for persons).

Determining the driver-associated state may also comprise post-processing procedures after having determined the current condition of the cabin/vehicle, e.g., after having applied computer vision and machine learning algorithms to determine information of passengers (number, age, pose, etc.) in the vehicle and/or information of objects in the vehicle (kind of objects, position of the objects, etc.) or, generally, after having collected (and possibly also) pre-processed the sensor data. The post-processing may be achieved by filtering of input signals (e.g., low pass filtering, band pass filtering, Kalman filtering, etc.), input signal verification/plausibility checks (e.g., range checks, relationships between two or more signals, etc.), transfer functions (e.g., signal range modification, normalization, etc.), state machine updates (e.g., hidden Markov models, discrete state machines, etc.), and signal fusion (e.g., combination of multiple input signals to derive additional processed signals).

The method proceeds in box 12 (in some embodiments also executed by the vehicle monitoring compute unit) with comparing the driver associated state to one or more predefined rules. Predefined rules are to be understood such that the rules are defined before comparing the rules with the driver-associated state. The rules can be predefined before the driver enters the vehicle and also predefined on the fly by remote access to the vehicle's computing systems. For example, a parent may access the vehicle's computing systems via using an application on her/his phone that connects the parent with the vehicle. The parent may define parameters for preconfigured rules or define rules from scratch. The one or more rules may concern at least one of an existence of a co-driver, a maximum number of persons in the vehicle, phone usage while driving, a maximum speed-limit, a given geographical area allowed for driving, and a time period allowed for driving.

For example, preconfigured rules that can be defined with parameters and that are provided by the application may comprise rules for at least one of a maximum number of occupants allowed in the car (parameter may be the number), presence of at least one adult person in the cabin (parameters may define which adult or where the adult is required to sit), maximum time phone usage is allowed while driving (parameter may be time in seconds, default value may be 0 s), maximum time phone usage is allowed while stationary in traffic (parameter may be time in seconds, default value may be 0 s), maximum allowed time with eyes off road while driving at speed larger than threshold (parameter may be time and speed), eating or drinking (parameter may be "enable" or "disable"), disallowing presence of certain objects in the vehicle, e.g. weapons (parameter(s) may be chosen from list of predefined detectable objects), disallowing dangerous objects on seats, e.g., large items that are observed to move or classified to be movable (parameter may be "enable" or "disable"), disallowing distractive interaction(s) with other passenger for longer than configurable time (parameter may be time), and allowing only specific people in the cabin via face identification (parameter may be chosen from a list of predefined persons). Further rules may relate to a maximum speed allowed, a maximum tolerance to exceed a current speed limit, a maximum allowed time above speed limit, geofencing, i.e., an allowed driving area, allowed time of the day and/or week for driving, and violation of traffic signs and red lights. Yet further rules may comprise complying with wearing or not wearing a mask (parameter may be "yes" or "no"); for example, a rule may define that a taxi driver/passengers in a taxi must wear a mask in order to ensure health safe travel or that a driver is not allowed to wear a mask in order to ensure driver's identification.

In the above-mentioned example, in which the driver-associated state has the characteristics of one driver and three passengers in the vehicle, one large item on a seat, not fixed on the seat, and distractive interactions of driver detected for 62 s in last 300 s, the rules may comprise that the driver is not allowed to take more than one additional passenger on a ride. Hence, comparing the driver-associated state to the rule may result in a determination of a violation of one or more rules.

In such cases, i.e., when a violation of one or more rules is detected, the method proceeds in box 13 (in some embodiments executed by a communication unit of the vehicle) with triggering a warning event. Warning events can have several formats. The warning event may be at least one of an email sent to an email address associated with the vehicle, e.g., the email address of the parent or an email associated with the carsharing/rental car firm, a message sent to an application connected with the vehicle, a warning sound outputted from onboard speakers, a warning light at a dashboard of the vehicle, and a warning message displayed on an infotainment system of the vehicle.

The application connected with the vehicle may be a mobile app (for parents and the like) in order to supervise and/or monitor of young drivers. A message may be triggered if the young driver is driving the car without an adult in the front passenger seat, the young driver is driving in car with more passengers than allowed, the young driver is using the phone while driving, the young driver is driving faster than allowed, and many other situations as explained herein. Alternatively, the application may also be a monitoring application of a car sharing firm or a car rental firm. A message may then be triggered if the vehicle leaves the country, if not a registered driver drives the car, if dangerous objects are placed within the car, and the like as explained herein.

As said, warning events may be different depending on the rule violation. For example, if the driver is distracted a longer time than allowed and not more than 10 % more than the allowed time (which may also be defined as a parameter of the rule), a warning signal may be outputted from onboard speakers to inform the driver to focus on driving again. If the driver is distracted more than 10% longer than the allowed time, a message may be sent to a supervising application associated with the vehicle resulting, e.g., in a pop-up message or the like indicating to the user that the driver was distracted a too long time.

Which type of warning event may be triggered, may also depend on a warning level associated with the violation of a rule. In such cases, the method further comprises determining the warning level, wherein the warning level defines the warning event to be triggered. For example, a warning level may be defined for each rule and may take values from 0 to 5, wherein 5 means high risk and immediate warning on all channels needed, 0 means no warning needed. For example, if the driver fights with others persons in the car, this may result in a warning level of 5 and warning events on all possible channels (e.g., email, application, phone call, sound output, warning message, and such) may be triggered. The violation of an eating rule may result in a warning level of 1 and may only trigger a local warning event in the vehicle reminding the driver of the rule.

The messages sent to external devices (e.g., emails, application messages etc.) may also comprise information from the sensors, such as an image captured by the onboard camera. Some messages may also open a live-stream to the onboard camera, enable the receiver of the message to connect to the speakers or similar actions. In further embodiments, some violations of rules may also lead to an interaction with one or more vehicle driving control systems resulting in not allowing to start the vehicle, stopping the vehicle (after a warning and timeout period), limiting the maximum speed to a very low value, turning on lights, or the like. The skilled person will be aware of further possible implementations of warning events.

Additionally, the method may also comprise calculating several scores based on the driver-associated state and the information received from the sensors. For example, it may be analyzed how energy efficient a given driver is driving and to compute an energy efficiency score. Frequent acceleration/deceleration, for example, could reduce such score, predictive driving with less variation in velocity can increase the score. Additionally, a safe driving score may be calculated to rate the driver's driving behavior in terms of safety. The score can be increased for signals related to safe driving, e.g. seat belt properly worn, normal seating positions, both hands on steering wheel, eyes on road status, scanning the surrounding or mirrors (based on eye gaze intersection) etc., and can be decreased by cues that are considered unsafe, e.g. phone usage, distraction by other activities than the driving task e.g. eating/drinking/smoking, seat belt misuse etc.).

Now turning to Fig. 2, which shows further details how a driver-associated state may be determined. In this example, at least one sensor is an onboard camera from which an image is received in box 21. The image data may be preprocessed as explained herein but may also be raw image data. Based on the image data, at least one of a seating pose of a driver of the vehicle, an interaction of the driver with a person and/or with an object in the vehicle, and a type of an object placed within the cabin is determined in box 22.

For example, it may be determined that the driver is leaning to and is frequently interacting with the co-driver. It may also be determined that a weapon is in the car. These determinations form the driver-associated state in this example. This determination of the driver-associated state based on at least one of the seating pose of the driver of the vehicle, the interaction of the driver with other passengers and/or with objects in the vehicle, and the type of the object placed within the cabin is depicted in box 23.

Hence, in the example of Fig. 2, at least a number of images (e.g., a sequence of a plurality of images) from the onboard camera may be used to determine the driver-associated state. This state is then compared - as shown in box 12 of Fig. 1 - with rules to determine whether a warning event shall be triggered - according to box 13 of Fig. 1.

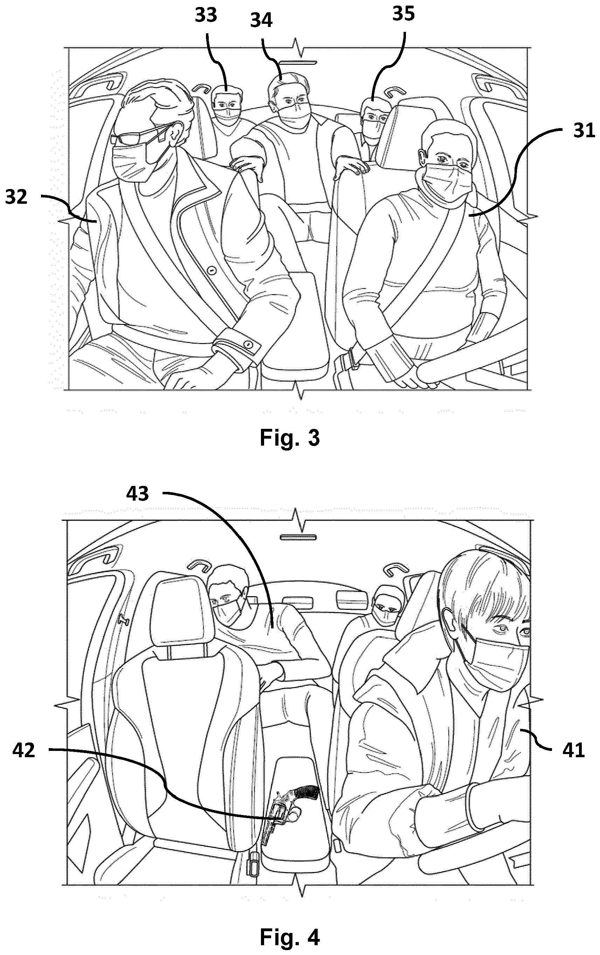

Figs. 3 and 4 show images from an onboard camera of situations, relevant to determining the driver-associated state. For example, in Fig. 3, it can be determined based on the image data that 5 persons are in the car. The driver 31, the co-driver 32, and three persons 33, 34, and 35 at the back seats. The person 34 may be determined to distract the driver 31 so that the driver has had her eyes off the road more time in a reference interval than allowed. A warning event may be triggered accordingly. The persons in the vehicle may be determined based on bounding box algorithms. The poses and interactions of the persons (passengers and driver) may be determined on body key points and/or bounding boxes (e.g., bounding boxes determined around the head, torso, or other body parts) that are generated based on the image data of one or more images. Body key points such as body joints (shoulder, hips, elbows, wrists, knees, ...) or other characteristic points of a human's body (eyes, ears, nose, mouth corners, finger tips, ...) may be localized by a neural network or computer vision algorithm The body key points often are used to derive a 2D or 3D skeleton model of a person in a vehicle's cabin, from which, for example, a seating pose may be determined. The body key points may further be tracked over time to estimate activities.

In Fig. 4, the driver 41 may be determined to not be an allowed driver, e.g., by facial identity or fingerprint sensors or the like. An object detection algorithm may detect that a weapon 42 is in the car. Moreover, the person 43 may be determined to be drunken based on the movement of the person 43 detected on a sequence of images. Hence, at least three different rules may be violated by the driver-associated state. The warning events in this case may even comprise a message to a central police message account and an interaction of, e.g., the vehicle monitoring compute unit or the communication unit with the driving control systems to stop the car, to lock/open the doors, to turn on the lights, or the like.

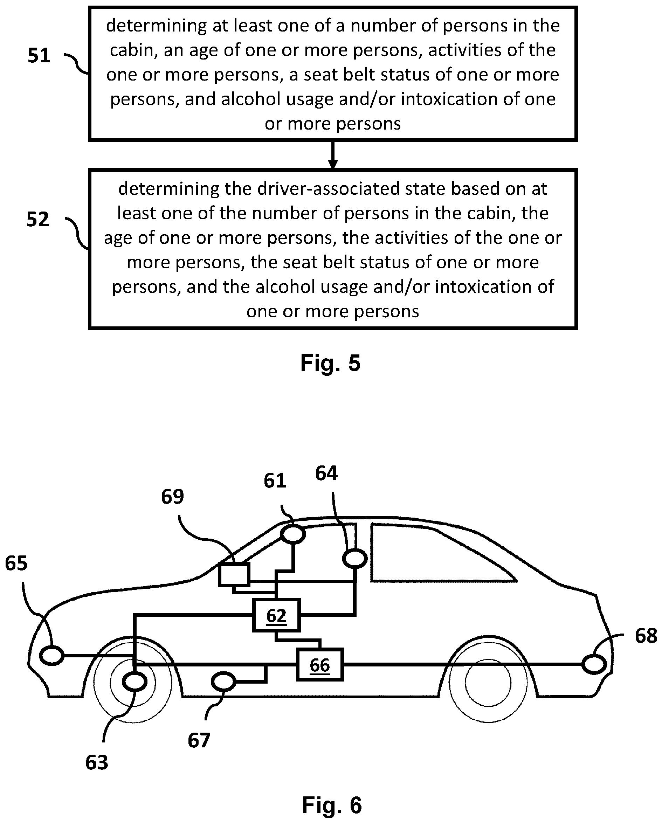

Fig. 5 is a further refinement of how a driver-associated state is determined according to some embodiments. Determining the driver-associated state may also comprise determining at least one of a number of persons in the cabin, an age of one or more persons, activities of the one or more persons, a seat belt status of one or more persons, and alcohol usage and/or intoxication of one or more persons as shown in box 51. This determination may be done solely based on onboard sensor data, such as image data, but may additionally or alternative take the input of other sensors into account. For example, the seat belt status may also or alternatively be determined based on a seat belt buckle sensor. Or, the intoxication may also or alternatively be determined based on a breath air sensor.

In box 52, the method proceeds with determining the driver-associated state based on at least one of the number of persons in the cabin, the age of one or more persons, the activities of the one or more persons, the seat belt status of one or more persons, and the alcohol usage and/or intoxication of one or more persons. It is apparent that different information of the cabin, of onboard sensors sensing the interior of the vehicle, further sensors or information provided by the advanced driver assistance system and/or the onboard infotainment system can be taken into account to determine the driver-associated state. More information can lead to a better estimation of the current situation of the vehicle driven by the driver.

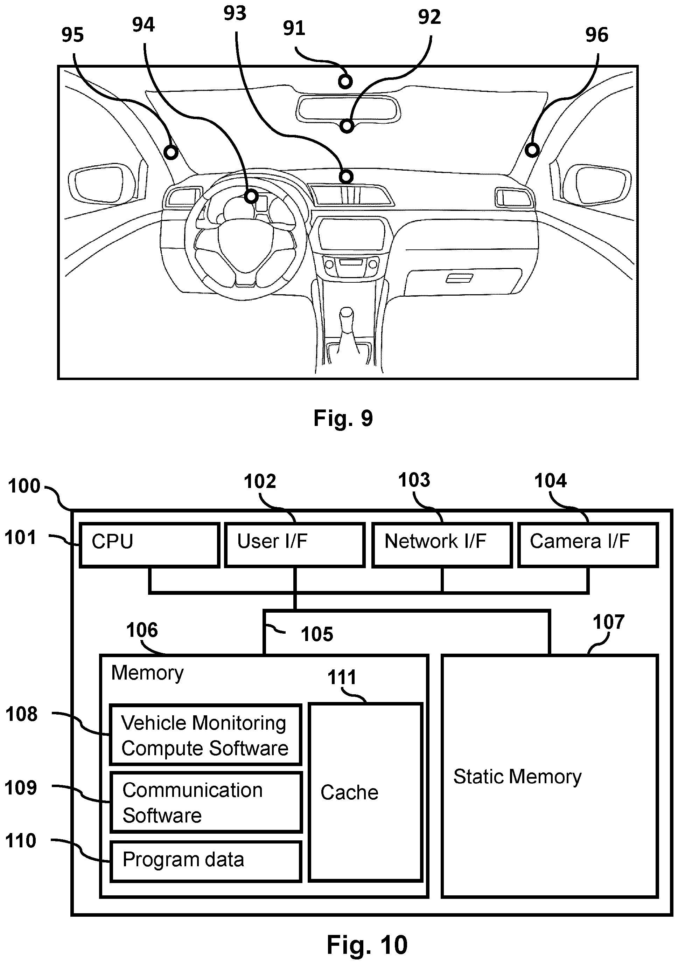

Fig. 6 presents a car with sensors and systems for providing additional data for determining the driver-associated state. An onboard camera 61 is depicted as a sensor, which senses the cabin's interior. There may be different positions of such onboard cameras, which are further described with respect to Fig. 9. The onboard camera 61 provides a vehicle monitoring compute unit 62 with raw or preprocessed image data. A preprocessing unit (not shown) may therefore be placed between the onboard camera 61 and the vehicle monitoring compute unit. The vehicle monitoring compute unit 62 may also receive other raw or preprocessed data from sensors, such as a speed sensor 63, a door sensor 64, a distance sensor 65 or any further sensors located in the vehicle. The preprocessing unit may also preprocess the raw data from the other sensors before it is provided to the vehicle monitoring compute unit 62.

Additionally, the vehicle monitoring compute unit 62 may receive additional data from an advanced driver assistance system 66, which is connected to a plurality of sensors, e.g., speed sensor 63, front distance sensor 65, side distance sensor 67, parking sensor 68 (also qualifying as distance sensor), further distance sensors (not shown), and such. The skilled person will understand that Fig. 6 is only schematic and there may be more or less sensors comprised by the car.

The advanced driver assistance system 66 generally includes technologies that assist drivers with the safe operation of a vehicle. The advanced driver assistance system 66 uses input from as sensors to detect nearby obstacles or driver errors. Hence, the advanced driver assistance system 66 already holds plenty of information that can be provided to the vehicle monitoring compute unit 62 for determining the driver-associated state.

Moreover, the vehicle monitoring compute unit 62 may also receive additional data from an onboard infotainment system 69. The onboard infotainment system 69 is a collection of hardware and software in vehicles that provides audio or video entertainment and further information, such as navigation and the like. The onboard infotainment system 69 may provide data to the vehicle monitoring compute unit 62, such as volume and type of music played in the car, planned route, and the like, which can be further used to determine the driver-associate state.

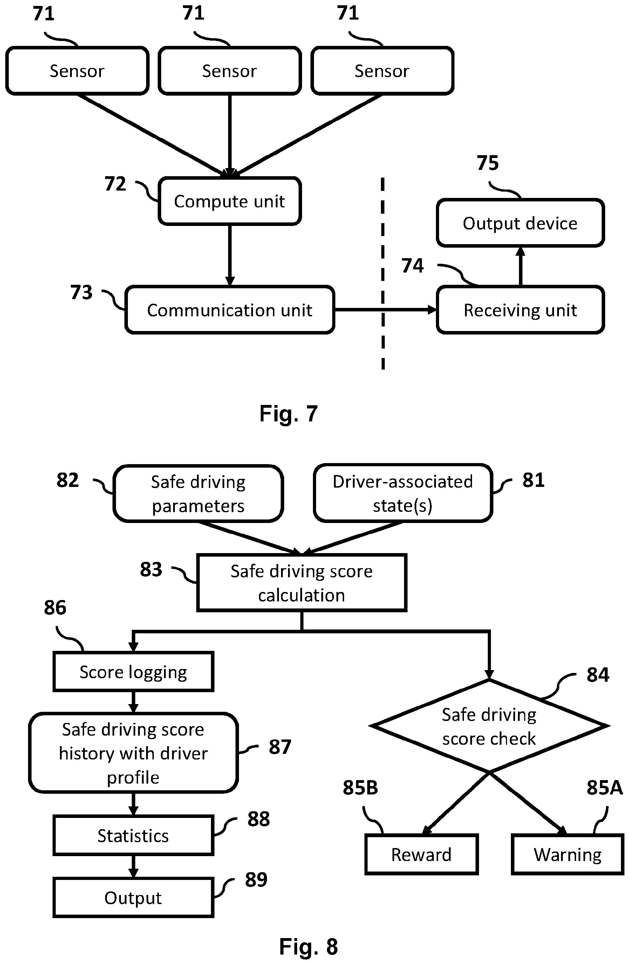

Fig. 7 depicts technical modules that support the vehicular safety monitoring method according to embodiments. One or more sensors 71 may be provided in or at the vehicle. The sensors provide sensor data, such as image data, other cabin sensor data, vehicle operating data, and the like, to a compute unit 72, which may be the vehicle monitoring compute unit 62 of Fig. 6. The compute unit 72 determines a driver-associated state based on data from the one or more 71. The compute unit 72 also compares the driver-associated state to one or more predefined rules. If the compute unit 72 detects a violation of the one or more rules, a communication unit 73 triggers a warning event. For example, the compute unit 72 detects a violation of rule #A, this information may be provided to communication unit 73. Communication unit 73 then checks which warning event shall be triggered by a violation of rule #A and subsequently triggers the warning event.

The warning event may be a transmission of a message or a signal to at least one receiving unit 74, which then triggers an output on at least one output device 75. The receiving unit 74 and the output device 75 may be internal or external to the vehicle. For example, the warning event may be a transmission of a signal to a receiving unit 74 associated with speakers as output device 75 in the vehicle, e.g., an onboard infotainment system. The onboard infotainment system may then initiate to output a warning sound or message at the speakers. In another example, the warning event may be a transmission of a message to an associated application on a mobile phone. The receiving unit 74 may be the mobile phone's computing system and the output device 75 may be the display, on which a notification of the violation or a video snippet of the violation may be displayed.

Fig. 8 shows a non-limiting implementation of the calculation of a safe driving score. The determined driver-associated state(s) 81, which correspond to the driver-associated state(s) according to some embodiments as explained before, can also be used to calculate a safe driving score. Therefore, safe driving parameters 82 may be defined by a supervisor, like a parent, the employer, a car rental firm, an insurance, or the like. The safe driving parameters 82 may be the same as the parameters used for defining the rules according to other embodiment or may be different or some may be the same and others different. The safe driving parameters 82 may define safe driving rules, which may comprise the rules explained in the embodiments before but also additional rules.

For example, not only critical rules, such as drinking alcohol during operating the vehicle, may be defined, which are relevant for triggering the warning events as explained before, but also less critical but safety relevant rules may be defined, e.g., whether the seat belt is properly worn (e.g., by detecting seat belt misuse or improper routing based on cabin images), whether normal seating positions are always kept (e.g., by determining body key points, bounding boxes, etc. over a plurality of cabin images), whether both hands are on steering wheel, whether the eyes have been kept on the road, whether the driver scans the surrounding or mirrors (based on eye gaze intersection), and much more.

Based on the safe driving parameters 82, a safe driving score is calculated in 83. The safe driving score may be calculated for a specified time, e.g., for one driving session (i.e., from entering the car to leaving the car), for one hour or another specified time period. If the rules resulting from the safe driving parameters 82 are followed, the safe driving score is increased, if not, the score is safe driving decreased if the violation of a rule is critical. For example, if a phone usage, distraction by other activities than the driving task, eating/drinking/smoking, seat belt misuse, or the like is detected in the driver-associated state, the safe driving score is decreased.

The safe driving score is checked in 84 against a threshold. For example, if the safe driving score can be in a range between 0 and 10, wherein 0 means no safe driving and 10 means that the driving behavior is safe, one may set a first threshold at 5, which results in a warning 85A, and one may set a second threshold at 7, which results in a reward 85B. For example, if the driver was obeying most of the time all safety rules and the safe driving score is calculated to be 9.5 over the whole last year, the reward 85B may be a reduction of the insurance fee. For example, if the driver, e.g., a young driver, was violating many safety rules and the safe driving score is calculated to be 3.5 for the last driving session, the warning 85A may be displayed after driving on the infotainment display and a warning message may be transmitted to the parent's mobile phone, similar to the warning events described above.

The safe driving score may additionally or alternatively in 86 be logged to a safe driving score history database 87, which associates the safe driving score with a driver profile. Supervisors can monitor the development of the safe driving score of the drivers via an internal user interface of the vehicle or an application (e.g., a mobile app), which connect to the safe driving score history database 87. Therefore, statistics 88 may be generated, for example, according to the supervisor's input, and an output 89 of the statistics 88 may be generated for display.

Fig. 9 presents an interior of a vehicle with possible positions of cameras. The vehicle may only comprise one camera but only a plurality of cameras at different positions. The cameras, which may be color, monochrome, or grayscale cameras, infrared cameras, depth cameras, thermal cameras, event cameras (i.e. cameras that operate at very high frame rates and only output the inter-frame differences, e.g., motion), or a combination thereof, may be placed in a centric position to allow capturing the full cabin, e.g. in the rear view mirror region (positions 91 and 92) or in the upper center stack (position 93).

Additionally or alternatively, one or more cameras may be located in front of the driver in the instrument cluster or on the steering column as depicted with position 94, or in the A-pillars as depicted with positions 95 and 96. Further cameras can be located, e.g. in back of the front row seats, in the B-pillars or ceiling to have a better visibility on the second or third seating row. With two or more cameras a depth image or 3D image can be created from the multi view geometry and based on principle of triangulation (e.g. stereo camera). These cameras may then capture images, e.g., at regular time intervals or if trigged by an application that requires vehicular safety monitoring as described herein. The applications using the images may be executed on the onboard computing system or at least in part executed remotely, e.g., in the cloud.

Fig. 10 is a diagrammatic representation of internal components of a computing system 100 of vehicular safety monitoring implementing the functionality as described herein. The computing system 100 may be located in the vehicle and includes at least one processor 101, a user interface 102, a network interface 103 and a main memory 106, that communicate with each other via a bus 105. Optionally, the computing system 100 may further include a static memory 107 and a disk-drive unit (not shown) that also communicate with each via the bus 105. A video display, an alpha-numeric input device and a cursor control device may be provided as examples of user interface 102.

Furthermore, the computing system 100 may also comprise a specified camera interface 104 to communicate with an onboard camera of the vehicle. Alternatively, the computing system 100 may communicate with the camera via the network interface 103. The camera is used for taking the image. The computing system 100 may also be connected to database systems (not shown) via the network interface, wherein the database systems store at least part of the images for providing the functionalities described herein.

The main memory 106 may be a random-access memory (RAM) and/or any further volatile memory. The main memory 106 may store program code for a vehicle monitoring compute software 108 and a communication software 109. Other modules needed for further functionalities described herein may be stored in the memory 106, too. The memory 106 may also store additional program data 110 required for providing the functionalities described herein, such as for preprocessing and the like. Part of the program data 110, the vehicle monitoring compute software 108 and/or the communication software 109 may also be stored in a separate, e.g., cloud memory and executed at least in part remotely.

According to an aspect, a vehicle is provided. The herein described methods may be stored as program codes 108, 109, or 110 and may be at least in part comprised by the vehicle. Parts of the program codes 108, 109, or 110 may also be stored and executed on a cloud server to reduce the computational effort on the vehicle's computing system 100. The vehicle may also comprise one or more cameras, e.g., connected via the camera interface 104, for capturing one or more images.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computerized method of vehicular safety monitoring, the method comprising
- determining a driver-associated state based on data from one or more sensors of a vehicle, wherein at least one sensor captures a cabin of the vehicle;
- comparing the driver-associated state to one or more predefined rules; and
- in response to detection of a violation of a rule of the one or more rules, triggering a warning event.

2. The method of claim 1, wherein a sensor of the one or more sensors is an onboard camera, and wherein determining the driver-associated state comprises:
- obtaining image data from the onboard camera;
- determining, based on the image data, at least one of a seating pose of a driver of the vehicle, an interaction of the driver with a person and/or with an object in the vehicle, and a type of an object placed within the cabin; and
- determining the driver-associated state based on at least one of the seating pose of the driver of the vehicle, the interaction of the driver with the person and/or with the object in the vehicle, and the type of the object placed within the cabin.

3. The method of claim 1 or claim 2, wherein determining the driver-associated state further comprises:
- determining at least one of a number of persons in the cabin, an age of one or more persons, activities of one or more persons, a seat belt status of one or more persons, and alcohol usage and/or intoxication of one or more persons; and
- determining the driver-associated state based on at least one of the number of persons in the cabin, the age of one or more persons, the activities of one or more persons, the seat belt status of one or more persons, and the alcohol usage and/or intoxication of one or more persons.

4. The method of any one of the preceding claims, wherein determining the driver-associated state is further based on additional vehicle data, wherein the additional vehicle data comprises input from further vehicle sensors, a state of an advanced driver assistance system, and/or a state of an onboard infotainment system.

5. The method of any one of the preceding claims, wherein the one or more rules concern at least one of:
- an existence of a co-driver;
- a maximum number of persons in the vehicle;
- phone usage while driving;
- a maximum speed-limit;
- an area allowed for driving; and
- a time period allowed for driving.

6. The method of any one of the preceding claims, wherein the warning event is at least one of an email sent to an email address associated with the vehicle, a message sent to an application connected with the vehicle, a warning sound outputted from onboard speakers, a warning light at a dashboard of the vehicle, and a warning message displayed on an infotainment system of the vehicle.

7. The method of any one of the preceding claims further comprising determining a warning level associated with the violation of a rule of the one or more rules, wherein the warning level defines the warning event to be triggered.

8. The method of any one of the preceding claims further comprising, in response to the violation of the one or more rules, interacting with one or more vehicle driving control systems.

9. A system of vehicular safety monitoring, the system comprising:
- one or more sensors, wherein at least one sensor is configured to capture a cabin of a vehicle;
- a vehicle monitoring compute unit configured to:
- determine a driver-associated state based on data from one or more sensors of the vehicle; and
- compare the driver-associated state to one or more predefined rules; and
- a communication unit configured to, in response to detection of a violation of a rule of the one or more rules, triggering a warning event.

10. The system of claim 9, wherein a cabin sensor of the one or more cabin sensors is an onboard camera, and wherein the vehicle monitoring compute unit is further, for determining the driver-associated state, configured to:
- obtain image data from the onboard camera;
- determine, based on the image data, at least one of a seating pose of a driver of the vehicle, an interaction of the driver with a person and/or with an object in the vehicle, and a type of an object placed within the cabin; and
- determine the driver-associated state based on at least one of the seating pose of the driver of the vehicle, the interaction of the driver with the person and/or with the object in the vehicle, and the type of the object placed within the cabin.

11. The system of claim 9 or 10, wherein the vehicle monitoring compute unit is further, for determining the state driver-associated state, configured to:
- determine at least one of a number of persons in the cabin, an age of one or more persons, activities of one or more persons, a seat belt status of one or more persons, and alcohol usage and/or intoxication of one or more persons; and
- determine the driver-associated state further based on at least one of the number of persons in the cabin, the age of one or more persons, the activities of one or more persons, the seat belt status of one or more persons, and the alcohol usage and/or intoxication of one or more persons.

12. The system of any one of claims 9 to 11, wherein the vehicle monitoring compute unit is further configured to determine the driver-associated state based on additional vehicle data, wherein the additional vehicle data comprises input from further vehicle sensors, a state of an advanced driver assistance system, and/or a state of an onboard infotainment system.

13. The system of any one of claims 9 to 12 further being, in response to the violation of the one or more rules, configured to interact with one or more vehicle driving control systems.

14. A vehicle comprising the system of vehicular safety monitoring according to any one of claims 9 to 13.

15. A computer program product comprising instructions, which, when executed on a computer, cause the computer to perform the method any one of claims 1 to 8.
